# EUROPÄISCHE PATENTSCHRIFT

(11) **EP 1 861 989 B1**
(45) Veröffentlichungstag und Bekanntmachung des Hinweises auf die Patenterteilung: **07.08.2019**
(21) Anmeldenummer: 07726714.4
(22) Anmeldetag: 08.03.2007
(51) Int. Cl.: H04L 29/08, H04L 12/24

(54) **VERFAHREN UND KONFIGURATIONS-/SOFTWAREAKTUALISIERUNGSSERVER ZUM ÜBERTRAGEN VON DATEN ZWISCHEN EINEM KUNDENGERÄT UND DEM SERVER**
METHOD AND CONFIGURATION/SOFTWARE UPDATE SERVER FOR TRANSMITTING DATA BETWEEN A CUSTOMER DEVICE AND THE SERVER
PROCÉDÉ ET SERVEUR DE MISE À JOUR DE CONFIGURATION/LOGICIEL PERMETTANT DE TRANSMETTRE DES DONNÉES ENTRE UN APPAREIL CLIENT ET LE SERVEUR

(30) Priorität: 08.03.2006 EP 06004745
(43) Veröffentlichungstag der Anmeldung: 05.12.2007
(73) Patentinhaber: Gigaset Communications GmbH, 40549 Düsseldorf (DE)
(72) Erfinder: BAMBACH, Marco, 82131 Gauting (DE); KRUK, Anton, 46499 Hamminkeln (DE); STAHL, Jürgen, 46397 Bocholt (DE)
(74) Vertreter: Michalski Hüttermann & Partner Patentanwälte mbB
(86) Internationale Anmeldenummer: PCT/EP2007/052185
(87) Internationale Veröffentlichungsnummer: WO 2007/101877

(56) Entgegenhaltungen:
- US-A1- 2002 052 915
- US-A1- 2002 078 185
- US-A1- 2003 200 321

## Beschreibung

Mit einem paketvermittelten Netz, z.B. dem Internet, verbundene, für die Internet-Kommunikation bei einem Internet-Dienstanbieter ["Internet-Service-Provider" (ISP)] registrierte Kommunikationsgeräte, die
**(i)** für unterschiedliche Dienste, z.B. "Voice Over Internet Protocol (VoIP)", "Session Initiation Protocol (SIP)", "Messaging-", "Email-" und/oder "Email Notification" ausgelegt sind und
**(ii)** z.B. als DECT-Mobilteil eines DECT-Telefons (Digital Enhanced Cordless Telecommunications) mit einer jeweils an ein paketvermitteltes und leitungsvermitteltes Netz angeschlossenen DECT-Basisstation, als WLAN-Mobilteil eines WLAN-Telefons (Wireless Local Area Network) mit einem jeweils an ein paketvermitteltes und leitungsvermitteltes Netz angeschlossenen "WLAN-Access Point", als "Set-Top-Box (STB)" und/oder als Router ausgebildet sein können,
benötigen im Gegensatz zu klassischen, mit dem leitungsvermittelten Netz verbundene Kommunikationsgeräte, z.B. PSTN-Telefone (Public Switched Telephone Network), eine Vielzahl providerspezifischer Einstellungen, die vor einer Nutzung manuell z.B. über einen Web-Server einzugeben sind oder im Gerät vorkonfiguriert sein müssen. Dies schränkt die Vermarktung von dem "Internet-Service-Provider" unabhängige Retail-Geräte massiv ein, da eine einfache Inbetriebnahme dieses Gerätes nicht möglich ist. Darüber hinaus ist eine providerspezifische Konfiguration, die effizient geändert werden kann, mit bestehenden Verfahren nur umständlich möglich.

Während providerspezifische Varianten von Kommunikationsgeräten vorkonfiguriert oder über ein "Remote Management System" (z.B. ein System gemäß der Spezifikation "TR 069") fern konfiguriert werden, müssen die Retail-Geräte manuell konfiguriert werden. Bei Änderung von Parametern oder Wechsel des Dienstanbieters muss die Konfiguration im Allgemeinen erneut durchgeführt werden. Die Einstellung einer providerspezifischen Konfigurationsvariante muss zudem häufig statisch oder durch den Austausch der Gerätesoftware erfolgen.

Die US-Patentanmeldung US 2002/052915 A1 beschreibt ein Value-Added-Service-Gateway (VAS), welches von einem Netzwerkanbieter (Network Service Provider, NSP) oder einem konkurrierenden Vermittlungsstellenanbieter (Competitive Local Exchange Carrier, CLEC) betrieben werden kann. Über dieses Gateway stellt der Netzwerkanbieter seinen Benutzern bzw. Kunden einen einheitlichen Zugangsmechanismus zu den verschiedenen Diensten des Netzwerkanbieters oder des Vermittlungsstellenanbieters zur Verfügung.

Die US-Patentanmeldung US 2003/200321 A1 beschreibt eine Netzwerkschnittstelleneinheit für die Verwendung zwischen einem lokalen Netzwerk (LAN) und einem öffentlichen oder privaten Netzwerk, wobei diese Netzwerkschnittstelleneinheit zur Herstellung von gesicherten Verbindungen zu einem VPN-Gateway dient. Das Einloggen, die Adressierung sowie die Authentifizierung geschieht über eine netzbasierte grafische Benutzeroberfläche (GUI) der Netzwerkschnittstelleneinheit, Die Netzwerkschnittstelle kann dabei auch einen Konfigurationsserver umfassen, der dazu dient, Konfigurationsdaten zu speichern.

Die US-Patentanmeldung US 2002/078185 A1 ein Verfahren und eine Startseite zur Konfiguration eines Mobiltelefons für den Zugang zu digitalen Kommunikationsdiensten. Das Mobiltelefon ist hierzu mit einer Telefonnummer ausgestattet und so konfiguriert, dass es beim ersten Einschalten einen Telefonanruf an die vorprogrammierte Telefonnummer durchführt um dann über diese Telefonverbindung mit der oben genannten Startseite verbunden zu werden, und schließlich mit dieser Startseite zu interagieren und kommunizieren. Die Startseite umfasst einen Server und eine Datenbank. Im Rahmen der Kommunikation zwischen Mobiltelefon und Startseite stellt der Server über die Client-Software auf dem Display des Mobiltelefons beispielsweise Eingabefelder für Benutzer-namen und Passwort für jeden vom Nutzer gebuchten Kommunikationsdienst sowie für den Namen des Netzwerkbetreibers dar, über den der Kommunikationsdienst gebucht wurde. Die über das Mobiltelefon eingegebenen Konfigurationsdaten sowie die aus der Datenbank der Startseite gelesenen Konfigurationsdaten werden schließlich in einer OTA-Konfigurationsnachricht gespeichert und nach Abbau der bestehenden Telefonverbindung zur Startseite per OTA-Konfigurationsnachricht über einen gesonderten Kanal, nämlich per SMS an das Mobiltelefon gesendet.
Die der Erfindung zugrunde liegende Aufgabe besteht darin, ein Verfahren und einen Konfigurations-/Softwareaktualisierungsserver zum Übertragen von Daten zwecks Durchführung der Konfiguration/Softwareaktualisierung in einem mit einem paketvermittelten Netzwerk, insbesondere dem Internet, verbundenen Kommunikationsgerät und das Kommunikationsgerät anzugeben, bei dem das Kommunikationsgerät mit den für die Konfiguration/Softwareaktualisierung erforderlichen Daten beim Einsatz des Gerätes zur Kommunikation mit einem anderen, insbesondere fernen, Teilnehmer quasi-automatisch konfiguriert und bei Bedarf auch bezüglich der Gerätesoftware aktualisiert werden kann.

Diese Aufgabe wird jeweils durch die Merkmale des Patentanspruches 1 und des Patentanspruches 13 gelöst.

Die der Erfindung zugrunde liegende Idee besteht darin, dass für die Konfiguration eines mit dem Internet verbundenen Kommunikationsgerätes benötigte Konfigurationsparameter - z.B. VoIP-Parameter- auf einem Konfigurations-/Softwareaktualisierungsserver zur Verfügung gestellt und diese vom Benutzer des Geräts entsprechend den benutzer- oder gerätespezifischen Gegebenheiten durch die Auswahl von aus mindestens zwei Arten von die Gegebenheiten kennzeichnende Abfragedaten - z.B. erste gemäß den Ansprüchen 5, 18 und 29 Länderinformationen beinhaltende Abfragedaten und zweite gemäß den Ansprüchen 5, 18 und 29 "Internet-Service-Provider (ISP)"-Informationen beinhaltende Abfragedaten - Ermittlungsdaten abgerufen werden.

Dabei spielt es keine Rolle, ob es sich bei dem Kommunikationsgerät - wie eingangs erwähnt - um ein Retail-Gerät oder um eine providerspezifische Variante des Kommunikationsgerätes handelt.

Dadurch wird der Benutzer des Kommunikationsgerätes von der manuellen und fehlerträchtigen Eingabe der Konfigurationsparameter befreit.

Das mit dem Internet verbundene Kommunikationsgerät lädt stattdessen vielmehr quasi-automatisch nach Maßgabe des Benutzers und gegebenenfalls - gemäß den Ansprüchen 4 und 17 - gesteuert durch die Eingabe eines Benutzernamens und eines Kennwortes die Konfigurationsparameter in das Gerät, so dass danach die unmittelbare Nutzung des Internets über den vom Benutzer gewählten "Internet-Service-Provider" möglich ist. Der erfindungsgemäße Ansatz ist hierbei nicht auf VoIP-Parameter beschränkt, sondern steht für weitere Dienste zur Verfügung, so z.B. - gemäß den Ansprüchen 10, 11, 23 und 24 - SIP-Parameter, Messaging-Parameter, "Email Account"-Parameter und/oder "Email Notification"-Parameter.

Die Erfindung entbindet den Benutzer nicht nur von der Hürde einer manuellen Konfiguration, sondern auch vom Kauf eines vorbelegten und damit eingeschränkten Gerätes. Sie ist insbesondere für kleine Geräte-Plattformen geeignet und benötigt keinen Personal Computer mit einem als "Client" bezeichneten Anwenderprogramm zum Durchsuchen von Internet-Dokumenten (WWW-Browser). Kennzeichnend ist auch, dass Teile der Benutzer- bzw. Bedienoberfläche dynamisch vom Konfigurations-/Softwareaktualisierungsserver gesteuert werden. Dazu werden die in Serverprofilen hinterlegten Parameterdaten durch Steuerinformationen ergänzt, durch die Abläufe im Gerät quasi-automatisch gesteuert werden.

So wird das Kommunikationsgerät z.B. durch die Steuerinformationen gemäß den Ansprüchen 3, 16 und 28 in einen Eingabezustand überführt. In diesem Zustand ist nicht nur der quasiautomatische Konfigurationsparameter-Download möglich, sondern es kann auch ein quasi-automatischen Software-, Parameter- oder Profil-Download angestoßen bzw. initiiert werden. Auf diese Weise ist das Gerät, ohne dass, der Benutzer Veränderungen am Gerät vornehmen muss, bezüglich Software immer aktualisiert (vgl. Ansprüche 2, 14, 27). Dies gilt ebenso für das Einpflegen neuer Parametersätze und Profile, die dem Benutzer des Kommunikationsgerätes dynamisch zur Verfügung stehen.

Als Kommunikationsgeräte kommen gemäß den Ansprüchen 10, 11, 12, 23, 24 und 25 vorzugsweise ein DECT-Mobilteil eines DECT-Telefons, ein WLAN-Mobilteil eines WLAN-Telefons, eine Set-Top-Box und ein Router in Frage.

Zusätzliche vorteilhafte Weiterbildungen der Erfindung sind in den übrigen Unteransprüchen angegeben.

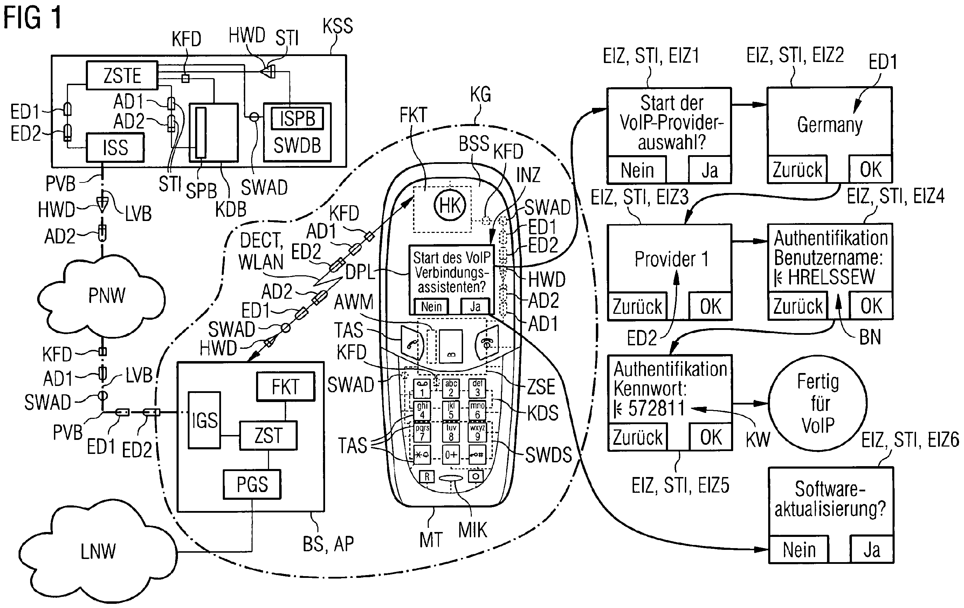

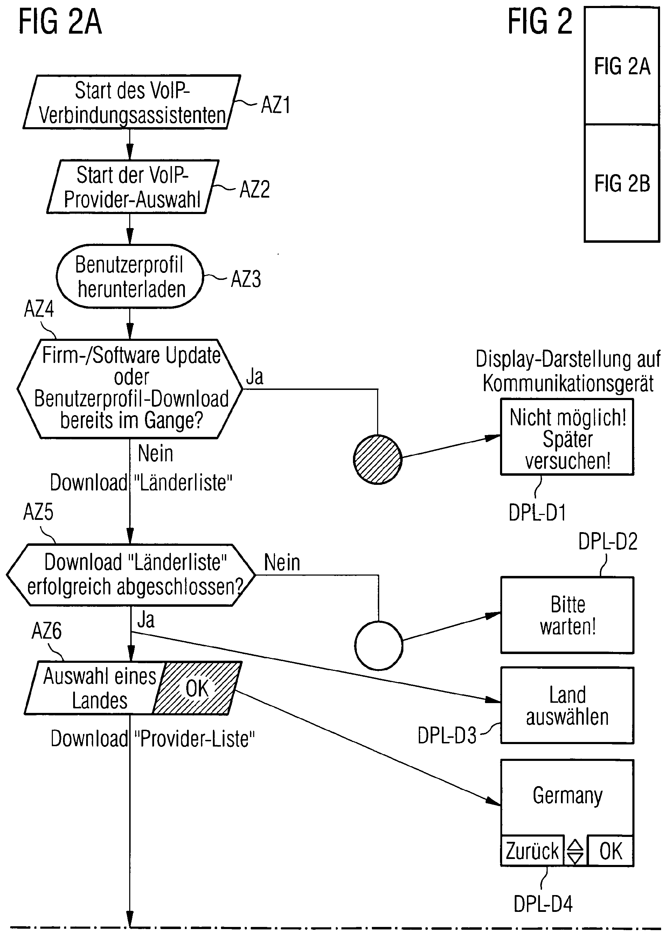

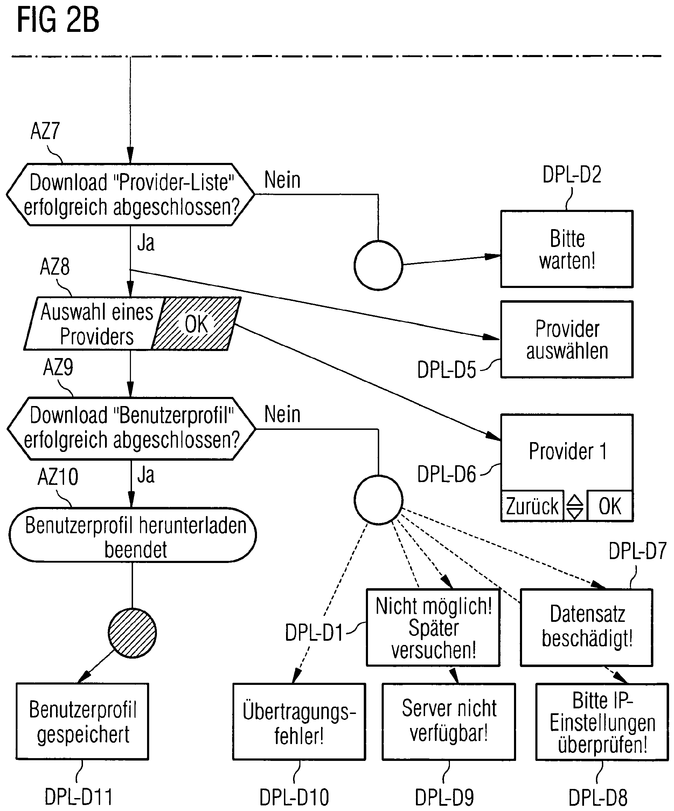

Ein Ausführungsbeispiel der Erfindung wird an der FIGUREN 1 und 2 erläutert. Es zeigen:
FIGUR 1 Beschaffung für die Konfiguration/Softwareaktualisierung eines mit dem Internet verbundenen Kommunikationsgerätes benötigte Konfigurationsparameter/Software von einem Konfigurations-/Softwareaktualisierungsserver
FIGUR 2 Ablaufdiagramm für die Beschaffung der Konfigurationsparameter

Figur 1 zeigt wie ein Kommunikationsgerät KG, das mit einem paketvermittelten Netzwerk PNW, z.B. dem Internet, verbunden ist, für die Internet-Kommunikation konfiguriert und hinsichtlich der dafür benötigten Software aktualisiert wird, indem in einem Konfigurations-/Softwareaktualisierungsserver KSS hinterlegte Konfigurationsparameter bzw. eine Software in das Kommunikationsgerät KG geladen wird. Das Kommunikationsgerät KG umfasst im vorliegenden Fall ein DECT-Telefon (**D**igital **E**nhanced **C**ordless **T**elecommunication) mit einem DECT-Mobilteil MT und einer an das paketvermittelte Netzwerk PNW und an ein leitungsvermitteltes Netzwerk LNW, dem **P**ublic **S**witched **T**elephone **N**etwork (PSTN) angeschlossene DECT-Basisstation BS, die über eine DECT-Luftschnittstelle zur drahtlosen Kommunikation miteinander verbunden sind.

Alternativ zu dieser Ausgestaltung des Kommunikationsgerätes KG ist es auch möglich, dass das Kommunikationsgerät KG aus einem WLAN-Telefon (**W**ireless **L**ocal **A**rea **N**etwork) mit einem WLAN-Mobilteil MT und einem wieder an das paketvermittelte Netzwerk PNW und an das leitungsvermittelte Netzwerk LNW angeschlossenen WLAN-Access Point AP aufweist, die über eine WLAN-Luftschnittstelle zur drahtlosen Kommunikation miteinander verbunden sind. Darüber hinaus ist es auch vorstellbar, dass das Kommunikationsgerät KG eine "Set-Top-Box" und/oder ein Router ist.

Im Rahmen der Internet-Kommunikation ist mit dem Kommunikationsgerät KG eine Vielzahl von Diensten nutzbar, die z.B. von einem "Internet-Service-Provider (ISP)" oder von einem sonstigen Anbieter, dem der Konfigurations-/Softwareaktualisierungsserver KSS gehört oder der diesen nutzt, angeboten werden. Zu diesen Diensten zählen neben dem Dienst "**V**oice **o**ver Internet **P**rotocol (VoIP)" die Dienste "**S**ession **I**nitiation **P**rotocol (SIP)", "Messaging", "Email" und/oder "Email-Notification". Für die Nutzung jedes dieser angebotenen Dienste benötigt das Kommunikationsgerät KG jeweils entsprechende Parameter, die in dem Konfigurations-/Softwareaktualisierungsserver KSS gespeichert sind.

Damit ein Benutzer des Kommunikationsgerätes KG für die Nutzung des angebotenen Internet-Dienstes benötigte Daten aus dem Konfigurations-/Softwareaktualisierungsserver KSS im Wesentlichen automatisch in das Kommunikationsgerät KG laden kann, sind von dem Benutzer ein paar Maßnahmen an dem Kommunikationsgerät KG durchzuführen. Die Maßnahmen umfassen beispielsweise eine Konfiguration und/oder Softwareaktualisierung. Bevor im Einzelnen auf diese Maßnahmen eingegangen wird, werden der hierfür notwendige Aufbau des Kommunikationsgerätes, bestehend aus der DECT-Basisstation BS und dem DECT-Mobilteil MT, und des Konfigurations-/Softwareaktualisierungsservers KSS beschrieben.

Die an das paketvermittelte Netzwerk PNW und das leitungsvermittelte Netzwerk LNW angeschlossene Basisstation BS weist für die Realisierung der Luftschnittstelle nach dem DECT-Standard ein Funkteil FKT und eine Zentrale Steuerung ZST auf, die miteinander verbunden sind. Für die Verbindung zum paketvermittelten Netzwerk PNW ist des Weiteren eine Internet-/Gerät-Schnittstelle IGS vorgesehen, die ebenfalls mit der Zentralen Steuerung ZST verbunden ist. Darüber hinaus ist für die Verbindung zu dem leitungsvermittelten Netzwerk LNW in der Basisstation BS eine mit der Zentralen Steuerung ZST ebenfalls verbundene PST-/Gerät-Schnittstelle PGS enthalten.

Damit das Mobilteil MT gemäß dem DECT-Standard drahtlos mit der Basisstation BS kommunizieren kann, weist das Mobilteil MT ebenfalls ein Funkteil FKT und eine Zentrale Steuerungseinrichtung ZSE auf, die auch miteinander verbunden sind. Zur Durchführung der vorstehend erwähnten Maßnahmen zum Laden von Konfigurationsdaten KFD und Softwareaktualisierungsdaten SWAD für die Nutzung eines Internet-Dienstes weist das Mobilteil MT außerdem noch einen Konfigurationsdatenspeicher KDS, einen Softwareaktualisierungsdatenspeicher SWDS, Auswahlmittel AWM und eine Benutzerschnittstelle BSS auf. Während die Auswahlmittel AWM vorzugsweise direkt in der Zentralen Steuerungseinrichtung ZSE integriert sind, sind der Konfigurationsdatenspeicher KDS, der Softwareaktualisierungsdatenspeicher SWDS und die Benutzerschnittstelle BSS mit der Zentralen Steuerungseinrichtung ZSE verbunden. Die Benutzerschnittstelle BSS umfasst zur Spracheingabe und -ausgabe ein Mikrofon MIK und eine Hörkapsel sowie zur Informationseingabe und -ausgabe ein Tastenfeld mit einer Vielzahl von Tasten TAS und ein Display DPL.

Der Konfigurations-/Softwareaktualisierungsserver KSS ist über eine Internet-/Server-Schnittstelle ISS dem paketvermittelten Netzwerk PNW zugeordnet. Für die Datenübertragung sind in dem Konfigurations-/Softwareaktualisierungsserver KSS neben Internet-/Server-Schnittstelle ISS eine Konfigurationsdatenbank KDB, eine Softwareaktualisierungsdatenbank SWDB und eine Zentrale Steuereinheit ZSTE vorhanden, wobei letztere sowohl mit der Internet-/Server-Schnittstelle ISS als auch mit der Konfigurationsdatenbank KDB und der Softwareaktualisierungsdatenbank SWDB verbunden ist. Zur Steuerung dieser Datenübertragung weist der Konfigurations-/Softwareaktualisierungsserver KSS in der Konfigurationsdatenbank KDB noch einen Speicherbereich SPB und in der Softwareaktualisierungsdatenbank SWDB einen Informationsspeicherbereich ISPB auf, die beide ebenfalls mit der Zentralen Steuereinheit ZSTE verbunden sind.

Die Übertragung der Daten zwecks Durchführung der Konfiguration in dem Kommunikationsgerät KG beginnt damit, dass das Mobilteil MT durch das Anschließen der Basisstation BS an das paketvermittelte Netzwerk PNW zur Herstellung einer physikalischen Verbindung PVB zwischen dem Kommunikationsgerät KG und dem Konfigurations-/Softwareaktualisierungsserver KSS in einen Initialisierungszustand INZ gebracht wird. In diesem Initialisierungszustand INZ wird auf dem Display DPL des Mobilteils MT ein Hinweistext "Start des VoIP-Verbindungsassistenten?" zusammen mit einer Softkey-Taste "Ja" und einer Softkey-Taste "Nein" ausgegeben. Wird daraufhin von dem Benutzer des Mobilteils MT die Softkey-Taste "Ja" betätigt, so kommt es zum Start der Konfiguration. Mit diesem Start der Konfiguration baut das Mobilteil MT über die Basisstation BS eine logische Verbindung LVB zu dem Konfigurations-/Softwareaktualisierungsserver KSS auf und authentifiziert sich bei dem Server, z.B. indem es mit dem Aufbau der logischen Verbindung eine mobilteil-spezifische Gerätekennung z.B. eine IPUI, eine MAC-Adresse oder ein zufällig, default-mäßig erzeugtes Datum überträgt, die dem Server bekannt ist. Infolge dieses logischen Verbindungsaufbaus, der von der Zentralen

Steuereinheit ZSTE des Konfigurations-/Softwareaktualisierungsservers KSS erkannt wird, liest diese aus dem Speicherbereich SPB der Konfigurationsdatenbank KDB erste Abfragedaten AD1 und zweite Abfragedaten AD2 aus und überträgt sie zur Ermittlung der für das Kommunikationsgerät KG zu übertragenden Konfigurationsdaten KFD über die Internet-/Server-Schnittstelle ISS, der physikalischen Verbindung PVB und der Internet-/Gerät-Schnittstelle IGS an die Zentrale Steuerung ZST der Basisstation BS. Von hier aus werden die Abfragedaten AD1, AD2 über die DECT-Luftschnittstelle der Zentralen Steuerungseinrichtung ZSE in dem Mobilteil MT übertragen.

Die Abfragedaten AD1, AD2 werden in dem Mobilteil MT vorzugsweise optisch über das Display DPL der Benutzerschnittstelle BSS ausgegeben. Es ist aber auch möglich diese akustisch, z.B. über die Hörkapsel HK der Benutzerschnittstelle BSS, auszugeben.

Die erste Abfragedaten AD1 beinhalten Länderinformationen - also z.B. diejenigen Länder, in denen das Mobilteil MT bzw. das Kommunikationsgerät KG aus Herstellersicht in Verkehr gebracht wird, während die zweiten Abfragedaten AD2 "Internet-Service-Provider (ISP)"-Informationen beinhalten - also z.B. die Provider, die in einem Land für den Käufer des Gerätes als potentielle "Internet-Service-Provider (ISP)" in Frage kommen.

Mit der Übertragung der Abfragedaten AD1, AD2 werden von dem Konfigurations-/Softwareaktualisierungsserver KSS Steuerungsinformationen STI übertragen, mit denen das Mobilteil MT in Folgezustände des Initialisierungszustandes INZ steuerbar ist. Zu diesem Zweck sind in der Zentralen Steuerungseinrichtung ZSE die Auswahlmittel AWM vorgesehen, die die mit den Abfragedaten AD1, AD2 übertragenen Steuerungsinformationen STI auswerten. Infolge dieser Auswertung werden von der Zentralen Steuerungseinrichtung ZSE über die Benutzerschnittstelle BSS Eingangszustände EIZ erzeugt und auf dem Display DPL dargestellt.

In einem ersten Eingabezustand EIZ1 erscheint auf dem Display DPL des Mobilteils MT ein weiterer Hinweistext "Start der VoIP-Providerauswahl?" wieder zusammen mit der Softkey-Taste "Ja" und der Softkey-Taste "Nein". Wird daraufhin von dem Benutzer des Mobilteils MT die Softkey-Taste "Ja" betätigt, so wird der Benutzer durch entsprechende Ausgabe auf dem Display DPL des Mobilteils MT aufgefordert in einem zweiten Eingabezustand EIZ2 ein Land aus den mit den ersten Abfragedaten AD1 übermittelten Länderinformationen mit Hilfe einer Softkey-Taste "Zurück" und einer Softkey-Taste "OK" auszuwählen. Gemäß der Darstellung in der FIGUR 1 erzeugt der Benutzer des Mobilteils MT in dem zweiten Eingabezustand EIZ2 durch die Landauswahl "Germany" mit der Betätigung der Softkey-Taste "OK" ein erstes Ermittlungsdatum ED1.

Mit der Betätigung der Softkey-Taste "OK" wird der Benutzer zudem wieder durch entsprechende Ausgabe auf dem Display DPL des Mobilteils MT aufgefordert in einem dritten Eingabezustand EIZ3 einen "Internet-Service-Provider" aus den mit den zweiten Abfragedaten AD2 übermittelten ISP-Informationen mit Hilfe der Softkey-Taste "Zurück" und der Softkey-Taste "OK" auszuwählen. Gemäß der Darstellung in der FIGUR 1 erzeugt der Benutzer des Mobilteils MT in dem dritten Eingabezustand EIZ3 durch die Providerauswahl "Provider 1" mit der Betätigung der Softkey-Taste "OK" ein zweites Ermittlungsdatum ED1.

Beide via die Benutzerschnittstelle BSS (Display DPL mit Softkey-Tasten) erzeugte Ermittlungsdaten ED1, ED2 werden nun von der Zentralen Steuerungseinrichtung ZSE über die DECT-Luftschnittstelle der Zentralen Steuerung ZST in der Basisstation BS übertragen. Von dort werden die Ermittlungsdaten ED1, ED2 anschließend über die Internet-/Gerät-Schnittstelle IGS, die physikalische Verbindung PVB und die Internet-/Server-Schnittstelle ISS an die Zentrale Steuereinheit ZSTE in dem Konfigurations-/Softwareaktualisierungsserver KSS weitergeleitet.

Anstelle der optischen Eingabe der Ermittlungsdaten ED1, ED2 mittels des Displays DPL und der Softkey-Tasten der Benutzerschnittstelle BSS ist es auch möglich, diese mittels Sprache, z.B. über das Mikrofon MIK der Benutzerschnittstelle BSS, einzugeben.

Die Abfragedaten AD1, AD2 als auch die Ermittlungsdaten ED1, ED2 können zudem jeweils einzeln - sprich: jeweils voneinander separiert - oder aber, wie vorstehend beschrieben zusammen übertragen werden.

Die Zentrale Steuereinheit ZSTE liest nach Erhalt der Ermittlungsdaten ED1, ED2 die zu den Ermittlungsdaten ED1, ED2 korrespondierenden Konfigurationsdaten KFD aus der Konfigurationsdatenbank KDB aus und überträgt diese über die Internet-/Server-Schnittstelle ISS, die physikalische Verbindung PVB und die Internet-/Gerät-Schnittstelle IGS an die Zentrale Steuerung ZST in der Basisstation BS. Von der Zentralen Steuerung ZST werden die Konfigurationsdaten KFD schließlich über die DECT-Luftschnittstelle an die Zentrale Steuerungseinrichtung ZSE in dem Mobilteil MT weitergeleitet, die die Konfigurationsdaten KFD in den Konfigurationsdatenspeicher KDS speichert.

Mit den gespeicherten Konfigurationsdaten KFD und der zuvor erwähnten Authentifizierung beim Server ist der Benutzer des Mobilteils MT mit dem Konfigurations-/Softwareaktualisierungsserver KSS im Prinzip kommunikationsfähig und könnte innerhalb einer beim Konfigurations-/Softwareaktualisierungsserver KSS registrierten "Community" kommunizieren. Dazu müsste der Benutzer den gestarteten VoIP-Verbindungsassistenten entweder beenden oder unterbrechen. Auf die Darstellung dieser Vorgänge ist jedoch im Rahmen des mit der FIGUR 1 beschriebenen Ausführungsbeispieles verzichtet worden.

Möchte der Benutzer hingegen auch die Dienste des von ihm ausgewählten "Internet-Service-Provider" nutzen können, so müssen diesem noch die vom Konfigurations-/Softwareaktualisierungsserver KSS erhaltenen und gespeicherten Konfigurationsdaten KFD zusammen mit einem Benutzernamen BN und einem Kennwort KW übermittelt werden. Den Benutzernamen BN und das Kennwort KW hat der Benutzer in der Regel zuvor von dem besagten "Internet-Service-Provider" erhalten, beispielsweise per vertrauliche Post oder via verschlüsselte Email auf einem Personal Computer des Benutzers.

Um diesem Sachverhalt Rechnung zu tragen, wird der Benutzer des Mobilteils MT, nachdem dieser im dritten Eingabezustand EIZ3 die Softkey-Taste "OK" betätigt hat, wieder durch entsprechende Ausgabe auf dem Display DPL des Mobilteils MT aufgefordert in einem vierten Eingabezustand EIZ4 einen vom "Internet-Service-Provider" bereits vorab erhaltenen Benutzernamen "HRELSSEW" BN mit Hilfe der Tasten TAS des Tastenfeldes der Benutzerschnittstelle BSS einzugeben und mit Hilfe der Softkey-Taste "Zurück" und der Softkey-Taste "OK" die Eingabe zu steuern. Die Eingabesteuerung erfolgt gemäß der Darstellung in der FIGUR 1 durch die Betätigung der Softkey-Taste "OK".

Mit der Betätigung der Softkey-Taste "OK" im dritten Eingabezustand EIZ3, wird der Benutzer wieder durch entsprechende Ausgabe auf dem Display DPL des Mobilteils MT aufgefordert in einem fünften Eingabezustand EIZ5 ein vom "Internet-Service-Provider" bereits vorab erhaltenes Kennwort "572811" KW mit Hilfe der Tasten TAS des Tastenfeldes der Benutzerschnittstelle BSS einzugeben und mit Hilfe der Softkey-Taste "Zurück" und der Softkey-Taste "OK" die Eingabe zu steuern. Die Eingabesteuerung erfolgt gemäß der Darstellung in der FIGUR 1 erneut durch die Betätigung der Softkey-Taste "OK", womit - wenngleich in der FIGUR 1 nicht explizit dargestellt - dem "Internet-Service-Provider" von der Zentralen Steuerungseinrichtung ZSE in dem Mobilteil MT über die DECT-Luftschnittstelle, die Zentrale Steuerung ZST und die Internet-/Gerät-Schnittstelle IGS der Basisstation BS und die physikalische Verbindung PVB zu dem "Internet-Service-Provider" der eingegebene Benutzername "HRELSSEW" BN, das eingegebene Kennwort "572811" KW und die Konfigurationsdaten KFD aus dem Konfigurationsdatenspeicher KDS übermittelt werden. Im Server des "Internet-Service-Provider" werden der übermittelte Benutzername "HRELSSEW" BN und das übermittelte Kennwort "572811" KW überprüft und nach erfolgreicher Überprüfung die Konfigurationsdaten KFD gespeichert, womit die Konfiguration des Kommunikationsgerätes KG für den Dienst "VoIP" beim "Internet-Service-Provider" abgeschlossen bzw. fertig ist.

Mitunter ist im Zuge der Internet-Kommunikation und der damit verbundenen Nutzung einer Vielzahl von angebotenen Diensten eine Softwareaktualisierung für das Kommunikationsgerät KG mit den zuvor beschriebenen Ausgestaltungsvarianten notwendig.

Die Übertragung der Daten zwecks Durchführung der Softwareaktualisierung in dem Kommunikationsgerät KG beginnt damit, dass das Mobilteil MT durch das Anschließen der Basisstation BS an das paketvermittelte Netzwerk PNW zur Herstellung der physikalischen Verbindung PVB zwischen dem Kommunikationsgerät KG und dem Konfigurations-/Softwareaktualisierungsserver KSS in den Initialisierungszustand INZ gebracht wird. In diesem Initialisierungszustand INZ wird auf dem Display DPL des Mobilteils MT ein Hinweistext "Start des VoIP-Verbindungsassistenten?" zusammen mit der Softkey-Taste "Ja" und der Softkey-Taste "Nein" ausgegeben. Wird daraufhin von dem Benutzer des Mobilteils MT die Softkey-Taste "Ja" betätigt, so kann vor dem Start der Konfiguration zu einer Softwareaktualisierung kommen. Wie beim Start der Konfiguration baut das Mobilteil MT auch beim Start der Softwareaktualisierung über die Basisstation BS eine logische Verbindung LVB zu dem Konfigurations-/Softwareaktualisierungsserver KSS auf und authentifiziert sich bei dem Server, z.B. indem es mit dem Aufbau der logischen Verbindung eine mobilteil-spezifische Gerätekennung z.B. eine IPUI, eine MAC-Adresse oder ein zufällig, default-mäßig erzeugtes Datum überträgt, die dem Server bekannt ist. Infolge dieses logischen Verbindungsaufbaus, der von der Zentralen Steuereinheit ZSTE des Konfigurations-/Softwareaktualisierungsservers KSS erkannt wird, liest diese aus dem Informationsspeicherbereich ISPB der Softwareaktualisierungsdatenbank SWDB Hinweisdaten HWD aus und überträgt sie zur Information des Benutzers des Kommunikationsgerätes über eine mögliche Softwareaktualisierung über die Internet-/Server-Schnittstelle ISS, der physikalischen Verbindung PVB und der Internet-/Gerät-Schnittstelle IGS an die Zentrale Steuerung ZST der Basisstation BS. Von hier aus werden die Hinweisdaten HWD über die DECT-Luftschnittstelle der Zentralen Steuerungseinrichtung ZSE in dem Mobilteil MT übertragen.

Die Hinweisdaten HWD werden in dem Mobilteil MT -, wie die Abfragedaten AD1, AD2 - vorzugsweise optisch über das Display DPL der Benutzerschnittstelle BSS ausgegeben. Es ist aber auch möglich diese wieder akustisch, z.B. über die Hörkapsel HK der Benutzerschnittstelle BSS, auszugeben.

Mit der Übertragung der Hinweisdaten HWD werden von dem Konfigurations-/Softwareaktualisierungsserver KSS wieder Steuerungsinformationen STI übertragen, mit denen das Mobilteil MT in Folgezustände des Initialisierungszustandes INZ steuerbar ist. Zu diesem Zweck sind in der Zentralen Steuerungseinrichtung ZSE die Auswahlmittel AWM vorgesehen, die die mit den Hinweisdaten HWD übertragenen Steuerungsinformationen STI auswerten. Infolge dieser Auswertung werden von der Zentralen Steuerungseinrichtung ZSE über die Benutzerschnittstelle BSS Eingangszustände EIZ erzeugt und auf dem Display DPL dargestellt.

In einem sechsten Eingabezustand EIZ6 erscheint auf dem Display DPL des Mobilteils MT ein weiterer Hinweistext "Softwareaktualisierung?" wieder zusammen mit der Softkey-Taste "Ja" und der Softkey-Taste "Nein". Wird daraufhin von dem Benutzer des Mobilteils MT die Softkey-Taste "Ja" betätigt, so wird dieser Wunsch des Benutzers eine Softwareaktualisierung durchzuführen von der Zentralen Steuerungseinrichtung ZSE über die DECT-Luftschnittstelle, die Zentrale Steuerung ZST und die Internet-/Gerät-Schnittstelle IGS in der Basisstation
BS, die physikalische Verbindung PVB und die Internet-/Server-Schnittstelle ISS der Zentralen Steuereinheit ZSTE in dem Konfigurations-/Softwareaktualisierungsserver KSS mitgeteilt.

Die Zentrale Steuereinheit ZSTE liest danach Softwareaktualisierungsdaten SWAD aus der Softwareaktualisierungsdatenbank SWDB aus und überträgt diese über die Internet-/Server-Schnittstelle ISS, die physikalische Verbindung PVB und die Internet-/Gerät-Schnittstelle IGS an die Zentrale Steuerung ZST in der Basisstation BS. Von der Zentralen Steuerung ZST werden die Konfigurationsdaten KFD schließlich über die DECT-Luftschnittstelle an die Zentrale Steuerungseinrichtung ZSE in dem Mobilteil MT weitergeleitet, die die Softwareaktualisierungsdaten SWAD in den Softwareaktualisierungsdatenspeicher SWDS speichert.

FIGUR 2 zeigt ein Ablaufdiagramm für die Beschaffung der Konfigurationsdaten KFD von dem Konfigurations-/Softwareaktualisierungsserver KSS durch das Kommunikationsgerät KG auf der Basis der Ausführungen zu der FIGUR 1.

In einem ersten Ablaufzustand AZ1 wird in dem Kommunikationsgerät KG der VoIP-Verbindungsassistent gestartet. Danach wird in einem zweiten Ablaufzustand AZ2 die VoIP-Providerauswahl in dem Kommunikationsgerät KG gestartet. In einem darauffolgenden dritten Ablaufzustand AZ3 beginnt das Kommunikationsgerät KG damit, ein Benutzerprofil von dem Konfigurations-/Softwareaktualisierungsserver KSS herunterzuladen, wobei in einem vierten Ablaufzustand AZ4 abgefragt wird, ob ein Firm-/Software Update oder eine Benutzerprofil-Download bereits im Gange ist. Wird diese Abfrage mit "Ja" beantwortet, so wird auf dem Display DPL des Kommunikationsgerätes KG eine erste Display-Darstellung "Nicht möglich! Später versuchen!" DPL-D1 ausgegeben. Im anderen Fall, bei der Antwort "Nein" beginnt das Kommunikationsgerät KG mit dem Download einer Länderliste von dem Konfigurations-/Softwareaktualisierungsserver KSS. In einem fünften Ablaufzustand AZ5 wird überprüft, ob der Download der Länderliste erfolgreich abgeschlossen ist. Ergibt die Überprüfung, dass dies nicht der Fall ist (Antwort der Abfrage ist "Nein"), so wird auf dem Display DPL des Kommunikationsgerätes KG eine zweite Display-Darstellung "Bitte warten!" DPL-D2 ausgegeben. Anderenfalls, bei der Antwort "Ja", erscheint auf dem Display des Kommunikationsgerätes KG eine dritte Display-Darstellung "Land auswählen" DPL-D3. In einem sechsten Ablaufzustand AZ6 wird durch Benutzerbetätigung einer "OK"-Taste ein Land ausgewählt, wodurch auf dem Display des Kommunikationsgerätes KG eine vierte Display-Darstellung "Germany mit einer Softkey-Taste "Zurück" und einer Softkey-Taste "OK"" DPL-D4 erscheint und das Kommunikationsgerät KG mit dem Download einer Providerliste von dem Konfigurations-/Softwareaktualisierungsserver KSS startet. Im Folgenden, in einem fünften Ablaufzustand AZ7, wird geklärt, ob der Download der Providerliste erfolgreich abgeschlossen ist. Ergibt die Abklärung, dass dies nicht der Fall ist (Antwort der Abfrage ist "Nein"), so wird auf dem Display DPL des Kommunikationsgerätes KG wieder die zweite Display-Darstellung "Bitte warten!" DPL-D2 ausgegeben. Anderenfalls, bei der Antwort "Ja", erscheint auf dem Display des Kommunikationsgerätes KG eine fünfte Display-Darstellung "Provider auswählen" DPL-D5. Danach wird in einem achten Ablaufzustand AZ8 durch erneute Benutzerbetätigung der "OK"-Taste ein Provider ausgewählt, wodurch auf dem Display des Kommunikationsgerätes KG eine sechste Display-Darstellung "Provider 1 mit einer Softkey-Taste "Zurück" und einer Softkey-Taste "OK"" DPL-D6 erscheint. Anschließend wird in einem neunten Ablaufzustand AZ9 abgefragt, ob der in dem dritten Ablaufzustand AZ3 gestartete Download des Benutzerprofils erfolgreich abgeschlossen ist. Wird diese Abfrage mit "Nein" beantwortet, so wird auf dem Display DPL des Kommunikationsgerätes KG entweder wieder die erste Display-Darstellung "Nicht möglich! Später versuchen!" DPL-D1, eine siebte Display-Darstellung "Datensatz beschädigt!" DPL-D7, eine achte Display-Darstellung "Bitte IP-Einstellungen überprüfen!" DPL-D8, eine neunte Display-Darstellung "Server nicht verfügbar!" DPL-D9 oder eine zehnte Display-Darstellung "Übetragungsfehler!" DPL-D10 ausgegeben.

Im anderen Fall, bei der Antwort "Ja" ist mit einem zehnten Ablaufzustand AZ10 das Herunterladen des Benutzerprofils beendet und auf dem Display DPL des Kommunikationsgerätes KG erscheint eine elfte Display-Darstellung "Benutzerprofil gespeichert" DPL-D11.

## Patentansprüche

1. Verfahren zum Übertragen von Daten zwecks Durchführung der Konfiguration/Softwareaktualisierung in einem mit dem Internet, verbundenen Kommunikationsgerät (KG) mit folgenden Verfahrensschritten:
a) Das Kommunikationsgerät (KG) wird über das Internet mit einem Konfigurations-/Softwareaktualisierungsserver (KSS) physikalisch verbunden (PVB),
b) zur Konfiguration des Kommunikationsgerätes (KG) für die internetbasierte Kommunikation wird das Kommunikationsgerät (KG) in einen Initialisierungszustand (INZ) gebracht, in dem der Benutzer des Kommunikationsgerätes (KG) den Start der Konfiguration durch die Eingabe eines Kommandos (Softkey-Taste "Ja") initiiert,
c) mit dem Start der Konfiguration baut das Kommunikationsgerät (KG) eine logische Verbindung (LVB) zu dem Konfigurations-/Softwareaktualisierungsserver (KSS) auf, der im Gegenzug mindestens zwei Arten von Abfragedaten, erste Abfragedaten (AD1) und zweite Abfragedaten (AD2), zur Ermittlung von für das Kommunikationsgerät (KG) zu übertragende Konfigurationsdaten (KFD) an das Kommunikationsgerät (KG) überträgt,
d) das Kommunikationsgerät (KG) geht nach dem Empfang der ersten Abfragedaten (AD1) und der zweiten Abfragedaten (AD2) jeweils in einen Eingabezustand (EIZ) über, in dem der Benutzer des Kommunikationsgerätes (KG) aus den ersten Abfragedaten (AD1) ein erstes Ermittlungsdatum (ED1) und aus den zweiten Abfragedaten (AD2) ein zweites Ermittlungsdatum (ED2) zur Ermittlung der Konfigurationsdaten (KFD) durch entsprechende Eingabe (Softkey-Taste "OK") auswählt, wobei das jeweils ausgewählte Ermittlungsdatum (ED1, ED2) dem Konfigurations-/Softwareaktualisierungsserver (KSS) übertragen wird,
e) der Konfigurations-/Softwareaktualisierungsserver (KSS) liest aus einer Konfigurationsdatenbank (KDB) zu den empfangenen ersten und zweiten Ermittlungsdatum (ED1, ED2) korrespondierende Konfigurationsdaten (KFD) für das Kommunikationsgerät (KG) aus und überträgt diese an das Kommunikationsgerät (KG).

2. Verfahren nach Anspruch 1, **dadurch gekennzeichnet, dass**
a) der Konfigurations-/Softwareaktualisierungsserver (KSS) zu den übertragenen Konfigurationsdaten (KFD) korrespondierende Hinweisdaten (HWD) zum Durchführen einer Softwareaktualisierung für das Kommunikationsgerät (KG) an das Kommunikationsgerät (KG) überträgt,
b) das Kommunikationsgerät (KG) nach dem Empfang der Hinweisdaten (HWD) in einen Eingabezustand (EIZ) übergeht, in dem der Benutzer des Kommunikationsgerätes (KG) durch Eingabe eines weiteren Kommandos (Softkey-Taste "Ja") die Softwareaktualisierung initiiert,
c) der Konfigurations-/Softwareaktualisierungsserver (KSS) aus einer Softwareaktualisierungsdatenbank (SWDB) zu den Hinweisdaten (HWD) korrespondierende Softwareaktualisierungsdaten (SWAD) für das Kommunikationsgerät (KG) ausliest und diese an das Kommunikationsgerät (KG) überträgt.

3. Verfahren nach Anspruch 1 oder 2, **dadurch gekennzeichnet, dass** die Abfragedaten (AD1, AD2) und die Hinweisdaten (HWD) um Steuerungsinformationen (STI) ergänzt werden, mit denen das Kommunikationsgerät (KG) in den Eingabezustand (EZI) gesteuert wird.

4. Verfahren nach Anspruch 3, **dadurch gekennzeichnet, dass** mit den Steuerungsinformationen (STI) der Benutzer des Kommunikationsgerätes (KG) aufgefordert wird, einen Benutzernamen (BN) und ein Kennwort (KW) einzugeben.

5. Verfahren nach Anspruch 1, **dadurch gekennzeichnet, dass** die ersten Abfragedaten (AD1) Länderinformationen und die zweiten Abfragedaten (AD2) "Internet-Service-Provider (ISP)"-Informationen beinhalten.

6. Verfahren nach Anspruch 1, **dadurch gekennzeichnet, dass** mit dem ersten Ermittlungsdatum (ED1) angegeben wird, in welchem Land das Kommunikationsgerät (KG) mit dem Internet verbunden ist.

7. Verfahren nach Anspruch 1, **dadurch gekennzeichnet, dass** mit dem zweiten Ermittlungsdatum (ED2) angegeben wird, über welchen "Internet-Service-Provider" das Kommunikationsgerät (KG) mit dem Internet verbunden wird.

8. Verfahren nach Anspruch 1 oder 2, **dadurch gekennzeichnet, dass** die Kommandos des Benutzers, das erste Ermittlungsdatum (ED1) und das zweite Ermittlungsdatum (ED2) mittels Tasten und/oder Sprache eingegeben werden.

9. Verfahren nach Anspruch 1 oder 2, **dadurch gekennzeichnet, dass** die Abfragedaten (AD1, AD2) und die Hinweisdaten (HWD) akustisch und/oder optisch ausgegeben werden.

10. Verfahren nach Anspruch 1, **dadurch gekennzeichnet, dass** ein "Voice over Internet Protocol"-, "Session Initiation Protocol"-, "Messaging-", "Email-" und/oder "Email Notification"-fähiges DECT-Mobilteil (MT) eines DECT-Telefons mit einer jeweils an das Internet und an ein leitungsvermitteltes Netzwerk (LNW) angeschlossenen DECT-Basisstation (BS) als das Kommunikationsgerät (KG) benutzt wird.

11. Verfahren nach Anspruch 1, **dadurch gekennzeichnet, dass** ein "Voice over Internet Protocol"-, "Session Initiation Protocol"-, "Messaging-", "Email-" und/oder "Email Notification"-fähiges WLAN-Mobilteil (MT) eines WLAN-Telefons mit einem jeweils an das Internet und an ein leitungsvermitteltes Netzwerk (LNW) angeschlossenen "WLAN-Access Point" (AP) als das Kommunikationsgerät (KG) benutzt wird.

12. Verfahren nach Anspruch 1, **dadurch gekennzeichnet, dass** eine "Set-Top-Box" und/oder ein Router als das Kommunikationsgerät (KG) benutzt werden.

13. Kommunikationsgerät (KG) zum Übertragen von Daten zwecks Durchführung der Konfiguration/Softwareaktualisierung in dem mit dem Internet verbundenen Gerät mit folgenden Merkmalen:
a) Eine Internet-/Gerät-Schnittstelle (IGS), über die das Kommunikationsgerät (KG) mit einem Konfigurations-/Softwareaktualisierungsserver (KSS) physikalisch verbunden ist (PVB),
b) eine Benutzerschnittstelle (BSS, DPL, HK, MIK, TAS), eine Zentrale Steuerungseinrichtung (ZSE) mit einem zugeordneten Konfigurationsdatenspeicher (KDS) und die Internet-/Gerät-Schnittstelle (IGS) sind derart ausgebildet und die Zentrale Steuerungseinrichtung (ZSE) ist mit der Benutzerschnittstelle (BSS, DPL, HK, MIK, TAS) und der Internet-/Gerät-Schnittstelle (IGS) derart verbunden, dass
b1) zur Konfiguration des Kommunikationsgerätes (KG) für die internetbasierte Kommunikation durch eine Eingabe über die Benutzerschnittstelle (BSS, DPL, HK, MIK, TAS) ein Initialisierungszustand (INZ) des Kommunikationsgerätes (KG) erzeugt wird,
b2) in dem Initialisierungszustand (INZ) der Start der Konfiguration durch die Eingabe eines Kommandos (Softkey-Taste "Ja") über die Benutzerschnittstelle (BSS, DPL, HK, MIK, TAS) initiiert wird,
b3) mit dem Start der Konfiguration über die Internet-/Gerät-Schnittstelle (IGS) eine logische Verbindung (LVB) zu dem Konfigurations-/Softwareaktualisierungsserver (KSS) aufgebaut wird,
b4) mindestens zwei von dem Konfigurations-/Softwareaktualisierungsserver (KSS) gesendete Arten von Abfragedaten, erste Abfragedaten (AD1) und zweite Abfragedaten (AD2), zur Ermittlung von für das Kommunikationsgerät (KG) zu übertragende Konfigurationsdaten (KFD) durch die Internet-/Gerät-Schnittstelle (IGS) empfangen und an die Zentrale Steuerungseinrichtung (ZSE) weiterleitet werden,
b5) die weitergeleiteten ersten Abfragedaten (AD1) und zweiten Abfragedaten (AD2) von der Zentralen Steuerungseinrichtung (ZSE) über die Benutzerschnittstelle (BSS, DPL, HK, MIK, TAS) ausgegeben werden und dabei jeweils ein Eingabezustand (EIZ) des Kommunikationsgerätes (KG) erzeugt wird,
b6) in dem Eingabezustand (EIZ) durch eine Eingabe (Softkey-Taste "OK") über die Benutzerschnittstelle (BSS, DPL, HK, MIK, TAS) aus den ersten Abfragedaten (AD1) ein erstes Ermittlungsdatum (ED1) und aus den zweiten Abfragedaten (AD2) ein zweites Ermittlungsdatum (ED2) zur Ermittlung der Konfigurationsdaten (KFD) ausgewählt wird, das jeweils von der Zentralen Steuerungseinrichtung (ZSE) über die Internet/Gerät-Schnittstelle (IGS) dem Konfigurations-/Softwareaktualisierungsserver (KSS) übertragen wird,
b7) von dem Konfigurations-/Softwareaktualisierungsserver (KSS) gesendete, zu dem ersten und zweiten Ermittlungsdatum (ED1, ED2) korrespondierende Konfigurationsdaten (KFD) für das Kommunikationsgerät (KG) durch die Internet-/Gerät-Schnittstelle (IGS) empfangen und an die Zentrale Steuerungseinrichtung (ZSE) weiterleitet werden, wo sie in dem Konfigurationsdatenspeicher (KDS) gespeichert werden.

14. Kommunikationsgerät (KG) nach Anspruch 13, **dadurch gekennzeichnet, dass** die Benutzerschnittstelle (BSS, DPL, HK, MIK, TAS), die Zentrale Steuerungseinrichtung (ZSE) mit einem zugeordneten Softwareaktualisierungsdatenspeicher (SWDS) und die Internet-/Gerät-Schnittstelle (IGS) derart ausgebildet sind und die Zentrale Steuerungseinrichtung (ZSE) mit der Benutzerschnittstelle (BSS, DPL, HK, MIK, TAS) und der Internet-/Gerät-Schnittstelle (IGS) derart verbunden ist, dass
a) von dem Konfigurations-/Softwareaktualisierungsserver (KSS) zu den übertragenen Konfigurationsdaten (KFD) korrespondierende Hinweisdaten (HWD) zum Durchführen einer Softwareaktualisierung für das Kommunikationsgerät (KG) durch die Internet-/Gerät-Schnittstelle (IGS) empfangen und an die Zentrale Steuerungseinrichtung (ZSE) weiterleitet werden,
b) die weitergeleiteten Hinweisdaten (HWD) von der Zentralen Steuerungseinrichtung (ZSE) über die Benutzerschnittstelle (BSS, DPL, HK, MIK, TAS) ausgegeben werden und dabei ein Eingabezustand (EIZ) des Kommunikationsgerätes (KG) erzeugt wird,
c) in dem Eingabezustand (EIZ) die Softwareaktualisierung durch die Eingabe eines weiteren Kommandos (Softkey-Taste "Ja") über die Benutzerschnittstelle (BSS, DPL, HK, MIK, TAS) initiiert wird,
d) von dem Konfigurations-/Softwareaktualisierungsserver (KSS) gesendete, zu den Hinweisdaten (HWD) korrespondierende Softwareaktualisierungsdaten (SWAD) für das Kommunikationsgerät (KG) durch die Internet-/Gerät-Schnittstelle (IGS) empfangen und an die Zentrale Steuerungseinrichtung (ZSE) weiterleitet werden, wo sie in dem Softwareaktualisierungsdatenspeicher (SWDS) gespeichert werden.

15. Kommunikationsgerät (KG) nach Anspruch 13 oder 14, **dadurch gekennzeichnet, dass** die Abfragedaten (AD1, AD2) und die Hinweisdaten (HWD) Steuerungsinformationen (STI) aufweisen.

16. Kommunikationsgerät (KG) nach Anspruch 15, **dadurch gekennzeichnet, dass** der Zentralen Steuerungseinrichtung (ZSE) Auswertemittel (AWM) zugeordnet sind, die die in den Abfragedaten (AD1, AD2) und Hinweisdaten (HWD) enthaltenen Steuerungsinformationen (STI) auswerten, wobei die Zentrale Steuerungseinrichtung (ZSE) infolge dieser Auswertung über die Benutzerschnittstelle (BSS, DPL, HK, MIK, TAS) den Eingabezustand (EIZ) erzeugt.

17. Kommunikationsgerät (KG) nach Anspruch 16, **dadurch gekennzeichnet, dass** die Steuerungsinformationen (STI) derart beschaffen sind, dass in dem durch die Zentrale Steuerungseinrichtung (ZSE) und die Benutzerschnittstelle (BSS, DPL, HK, MIK, TAS) erzeugten Eingabezustand (EIZ) der Benutzer des Kommunikationsgerätes (KG) aufgefordert wird, einen Benutzernamen (BN) und ein Kennwort (KW) einzugeben.

18. Kommunikationsgerät (KG) nach Anspruch 13, **dadurch gekennzeichnet, dass** in den ersten Abfragedaten (AD1) Länderinformationen und in den zweiten Abfragedaten (AD2) "Internet-Service-Provider (ISP)"-Informationen enthalten sind.

19. Kommunikationsgerät (KG) nach Anspruch 13, **dadurch gekennzeichnet, dass** das erste Ermittlungsdatum (ED1) angibt, in welchem Land das Kommunikationsgerät (KG) mit dem Internet verbunden ist.

20. Kommunikationsgerät (KG) nach Anspruch 13, **dadurch gekennzeichnet, dass** das zweite Ermittlungsdatum (ED2) angibt, über welchen "Internet-Service-Provider" das Kommunikationsgerät (KG) mit dem Internet verbunden ist.

21. Kommunikationsgerät (KG) nach Anspruch 13 oder 14, **dadurch gekennzeichnet, dass** die Benutzerschnittstelle (BSS, DPL, HK, MIK, TAS) derart ausgebildet ist, dass die Kommandos des Benutzers, das erste Ermittlungsdatum (ED1) und das zweite Ermittlungsdatum (ED2) mittels Tasten und/oder Sprache eingebbar sind.

22. Kommunikationsgerät (KG) nach Anspruch 13 oder 14, **dadurch gekennzeichnet, dass** die Benutzerschnittstelle (BSS, DPL, HK, MIK, TAS) derart ausgebildet ist, dass die Abfragedaten (AD1) und die Hinweisdaten (HWD) akustisch und/oder optisch ausgebbar sind.

23. Kommunikationsgerät (KG) nach Anspruch 13, **gekennzeichnet durch** ein "Voice over Internet Protocol"-, "Session Initiation Protocol"-, "Messaging-", "Email-" und/oder "Email Notification"-fähiges DECT-Mobilteil (MT) eines DECT-Telefons mit einer jeweils an das Internet und an ein leitungsvermitteltes Netzwerk (LNW) angeschlossenen DECT-Basisstation (BS).

24. Kommunikationsgerät (KG) nach Anspruch 13, **gekennzeichnet durch** ein "Voice over Internet Protocol"-, "Session Initiation Protocol"-, "Messaging-", "Email-" und/oder "Email Notification"-fähiges WLAN-Mobilteil (MT) eines WLAN-Telefons mit einem jeweils an das Internet und an ein leitungsvermitteltes Netzwerk (LNW) angeschlossenen "WLAN-Access Point".

25. Kommunikationsgerät (KG) nach Anspruch 13, **gekennzeichnet durch** eine "Set-Top-Box" und/oder einen Router.

## Claims

1. A method for transmitting data for the purpose of executing a configuration/software update in a communication device (KG) connected to the Internet, comprising the following method steps:
a) the communication device (KG) is physically connected (PVB) via the Internet to a configuration/software-update server (KSS),
b) for configuration of the communication device (KG) for the Internet-based communication, the communication device (KG) is brought into a state of initialisation (INZ) by the user of the communication device (KG) initiating the start of the configuration by inputting a command (softkey button "yes"),
c) with the start of the configuration the communication device (KG) establishes a logical connection (LVB) to the configuration/software-update server (KSS), which in return transmits to the communication device (KG) at least two types of query data - first query data (AD1) and second query data (AD2) - for determining configuration data (KFD) to be transmitted for the communication device (KG),
d) the communication device (KG), after receipt of each of the first query data (AD1) and the second query data (AD2), transitions into an input state (EIZ), in which the user of the communication device (KG) selects a first item of determination data (ED1) from the first query data (AD1) and a second item of determination data (ED2) from the second query data (AD2) in order to determine the configuration data (KFD) by corresponding input (softkey button "OK"), wherein the selected item of determination data (ED1, ED2) is in each case transmitted to the configuration/software-update server (KSS),
e) the configuration/software-update server (KSS) reads out, from a configuration database (KDB), configuration data (KFD) for the communication device (KG) corresponding to the received first and second item of determination data (ED1, ED2), and transmits said configuration data to the communication device (KG).

2. The method according to claim 1, **characterised in that**
a) the configuration/software-update server (KSS) transmits to the communication device (KG) advisory data (HWD), corresponding to the transmitted configuration data (KFD), for executing a software update for the communication device (KG),
b) the communication device (KG), after receipt of the advisory data (HWD), transitions into an input state (EIZ), in which the user of the communication device (KG) initiates the software update by inputting a further command (softkey button "yes"),
c) the configuration/software-update server (KSS) reads out, from a software-update database (SWDB), software-update data (SWAD) for the communication device (KG) corresponding to the advisory data (HWD), and transmits said software-update data to the communication device (KG).

3. The method according to claim 1 or 2, **characterised in that** the query data (AD1, AD2) and the advisory data (HWD) are supplemented by control information (STI), by which the communication device (KG) is controlled into the input state (EZI) .

4. The method according to claim 3, **characterised in that** the user of the communication device (KG) is requested by the control information (STI) to input a user name (BN) and a password (KW).

5. The method according to claim 1, **characterised in that** the first query data (AD1) contain country information and the second query data (AD2) contain Internet service provider (ISP) information.

6. The method according to claim 1, **characterised in that** the first item of determination data (ED1) indicates the country in which the communication device (KG) is connected to the Internet.

7. The method according to claim 1, **characterised in that** the second item of determination data (ED2) indicates the Internet service provider by which the communication device (KG) is connected to the Internet.

8. The method according to claim 1 or 2, **characterised in that** the commands of the user, the first item of determination data (ED1) and the second item of determination data (ED2) are input by means of buttons and/or speech.

9. The method according to claim 1 or 2, **characterised in that** the query data (AD1, AD2) and the advisory data (HWD) are output acoustically and/or optically.

10. The method according to claim 1, **characterised in that** a DECT mobile part (MT), enabled for Voice over Internet Protocol, session initiation protocol, messaging, email and/or email notification, of a DECT telephone with a DECT base station (BS) connected to the Internet and to a circuit-switched network (LNW) is used as the communication device (KG) .

11. The method according to claim 1, **characterised in that** a WLAN mobile part (MT) enabled for Voice over Internet Protocol, session initiation protocol, messaging, email and/or email notification, of a WLAN telephone with a WLAN access point (AP) connected to the Internet and to a circuit-switched network (LNW) is used as the communication device (KG).

12. The method according to claim 1, **characterised in that** a set-top box and/or a router are/is used as the communication device (KG).

13. A communication device (KG) for transmitting data for the purpose of executing a configuration/software update in the device connected to the Internet, having the following features:
a) an Internet/device interface (IGS), via which the communication device (KG) is physically connected (PVB) to a configuration/software-update server (KSS),
b) a user interface (BSS, DPL, HK, MIK, TAS), a central control device (ZSE) with an associated configuration data memory (KDS) and the Internet/device interface (IGS) are configured in such a way, and the central control device (ZSE) is connected to the user interface (BSS, DPL, HK, MIK, TAS) and the Internet/device interface (IGS) in such a way that
b1) for configuration of the communication device (KG) for the Internet-based communication, a state of initialisation (INZ) of the communication device (KG) is generated by an input via the user interface (BSS, DPL, HK, MIK, TAS),
b2) in the state of initialisation (INZ) the start of the configuration is initiated by the input of a command (softkey button "yes") via the user interface (BSS, DPL, HK, MIK, TAS),
b3) with the start of the configuration via the Internet/device interface (IGS) a logical connection (LVB) to the configuration/software-update server (KSS) is established,
b4) at least two types of query data - first query data (AD1) and second query data (AD2) - sent from the configuration/software-update server (KSS) for determining configuration data (KFD) to be transmitted for the communication device (KG) are received by the Internet/device interface (IGS) and are forwarded to the central control device (ZSE),
b5) the forwarded first query data (AD1) and second query data (AD2) are output by the central control device (ZSE) via the user interface (BSS, DPL, HK, MIK, TAS), and in so doing an input state (EIZ) of the communication device (KG) is generated,
b6) in the input state (EIZ) a first item of determination data (ED1) is selected from the first query data (AD1) and a second item of determination data (ED2) is selected from the second query data (AD2) by an input (softkey button "OK") via the user interface (BSS, DPL, HK, MIK, TAS) in order to determine the configuration data (KFD) and is transmitted in each case from the central control device (ZSE) via the Internet/device interface (IGS) to the configuration/software-update server (KSS),
b7) configuration data (KFD) for the communication device (KG) sent from the configuration/software-update server (KSS) and corresponding to the first and second items of determination data (ED1, ED2) are received by the Internet/device interface (IGS) and forwarded to the central control device (ZSE), where they are stored in the configuration data memory (KDS).

14. The communication device (KG) according to claim 13, **characterised in that** the user interface (BSS, DPL, HK, MIK, TAS), the central control device (ZSE) with an associated software-update data memory (SWDS) and the Internet/device interface (IGS) are configured in such a way, and the central control device (ZSE) is connected to the user interface (BSS, DPL, HK, MIK, TAS) and the Internet/device interface (IGS) in such a way that
a) advisory data (HWD), corresponding to the transmitted configuration data (KFD), for executing a software update for the communication device (KG) are received by the Internet/device interface (IGS) from the configuration/software-update server (KSS) and are forwarded to the central control device (ZSE),
b) the forwarded advisory data (HWD) are output from the central control device (ZSE) via the user interface (BSS, DPL, HK, MIK, TAS), and in so doing an input state (EIZ) of the communication device (KG) is generated,
c) in the input state (EIZ) the software update is initiated by the input of a further command (softkey button "yes") via the user interface (BSS, DPL, HK, MIK, TAS),
d) software-update data (SWAD) for the communication device (KG), sent from the configuration/software-update server (KSS) and corresponding to the advisory data (HWD), are received by the Internet/device interface (IGS) and forwarded to the central control device (ZSE), where they are stored in the software-update data memory (SWDS).

15. The communication device (KG) according to claim 13 or 14, **characterised in that** the query data (AD1, AD2) and the advisory data (HWD) include control information (STI).

16. The communication device (KG) according to claim 15, **characterised in that** the central control device (ZSE) is assigned evaluation means (AWM), which evaluate the control information (STI) contained in the query data (AD1, AD2) and advisory data (HWD), wherein the central control device (ZSE) generates the input state (EIZ) via the user interface (BSS, DPL, HK, MIK, TAS) as a result of this evaluation.

17. The communication device (KG) according to claim 16, **characterised in that** the control information (STI) is of such a nature that, in the input state (EIZ) generated by the central control device (ZSE) and the user interface (BSS, DPL, HK, MIK, TAS), the user of the communication device (KG) is requested to input a user name (BN) and a password (KW).

18. The communication device (KG) according to claim 13, **characterised in that** the first query data (AD1) contain country information and the second query data (AD2) contain Internet service provider (ISP) information.

19. The communication device (KG) according to claim 13, **characterised in that** the first item of determination data (ED1) indicates the country in which the communication device (KG) is connected to the Internet.

20. The communication device (KG) according to claim 13, **characterised in that** the second item of determination data (ED2) indicates the Internet service provider by which the communication device (KG) is connected to the Internet.

21. The communication device (KG) according to claim 13 or 14, **characterised in that** the user interface (BSS, DPL, HK, MIK, TAS) is configured in such a way that the commands of the user, the first item of determination data (ED1), and the second item of determination data (ED2) can be input by means of buttons and/or speech.

22. The communication device (KG) according to claim 13 or 14, **characterised in that** the user interface (BSS, DPL, HK, MIK, TAS) is configured in such a way that the query data (AD1) and the advisory data (HWD) can be output acoustically and/or optically.

23. The communication device (KG) according to claim 13, **characterised by** a DECT mobile part (MT), enabled for Voice over Internet Protocol, session initiation protocol, messaging, email and/or email notification, of a DECT telephone with a DECT base station (BS) connected to the Internet and to a circuit-switched network (LNW).

24. The communication device (KG) according to claim 13, **characterised by** a WLAN mobile part (MT) enabled for Voice over Internet Protocol, session initiation protocol, messaging, email and/or email notification, of a WLAN telephone with a WLAN access point (AP) connected to the Internet and to a circuit-switched network (LNW).

25. The communication device (KG) according to claim 13, **characterised by** a set-top box and/or a router.

## Revendications

1. Procédé de transmission de données pour l'exécution de la mise à jour de la configuration / de logiciels dans un appareil de communication (KG) relié à internet avec les étapes de procédé suivantes :
a) l'appareil de communication (KG) est relié physiquement (PVB) par le biais d'internet avec un serveur de mise à jour de configuration / de logiciels (KSS),
b) pour la configuration de l'appareil de communication (KG) en vue de la connexion basée sur internet, l'appareil de communication (KG) est porté dans un état d'initialisation (INZ), dans lequel l'utilisateur de l'appareil de communication (KG) initie le démarrage de la configuration par l'entrée d'une consigne (touche programmable « oui »),
c) avec le démarrage de la configuration, l'appareil de communication (KG) établit une connexion logique (LVB) vers le serveur de mise à jour de configuration / de logiciels (KSS) qui transmet en retour au moins deux types de données d'interrogation, des premières données d'interrogation (AD1) et des deuxièmes données d'interrogation (AD2) pour la détermination de données de configuration (KFD) destinées à l'appareil de communication (KG) à transmettre vers l'appareil de communication (KG),
d) l'appareil de communication (KG) passe, après la réception des premières données d'interrogation (AD1) et des deuxièmes données d'interrogation (AD2) respectivement, dans un état de saisie (EIZ), dans lequel l'utilisateur de l'appareil de communication (KG) choisit une première date de détermination (ED1) à partir des premières données d'interrogation (AD1) et une deuxième date de détermination (ED2) à partir des deuxièmes données d'interrogation (AD2) pour la détermination des données de configuration (KFD) par la saisie correspondante (touche programmable « OK »), où la date de détermination (ED1, ED2) respectivement choisie est transmise au serveur de mise à jour de configuration /de logiciels (KSS),
e) le serveur de mise à jour de configuration / de logiciels (KSS) lit à partir d'une banque de données de configuration (KDB) des données de configuration (KFD) correspondant aux première et deuxième dates de détermination (ED1, ED2) reçues pour l'appareil de communication (KG) et transmet celles-ci à l'appareil de communication (KG).

2. Procédé selon la revendication 1, **caractérisé en ce que**
a) le serveur de mise à jour de configuration / de logiciels (KSS) transmet des données d'information (HWD) correspondant aux données de configuration (KFD) transmises pour l'exécution d'une mise à jour de logiciels pour l'appareil de communication (KG) à l'appareil de communication (KG),
b) l'appareil de communication (KG) passe dans un état de saisie (EIZ) après la réception des données d'information (HDW) par le fait que l'utilisateur de l'appareil de communication (KG) initie la mise à jour de logiciels par la saisie d'une nouvelle consigne (touche programmable « oui »),
c) le serveur de mise à jour de configuration / de logiciels (KSS) lit des données de mise à jour de logiciels (SWAD) pour l'appareil de communication (KG) correspondant aux données d'information (HWD) à partir d'une banque de données de mise à jour de logiciels (SWDB) et transmet celles-ci à l'appareil de communication (KG).

3. Procédé selon la revendication 1 ou la revendication 2, **caractérisé en ce que** les données d'interrogation (AD1, AD2) et les données d'information (HWD) sont complétées d'informations de consignes (STI) avec lesquelles l'appareil de communication (KG) est commandé dans un état de saisie (EZI) .

4. Procédé selon la revendication 3, **caractérisé en ce que**, par les informations de consignes (STI), l'utilisateur de l'appareil de communication (KG) est exhorté à saisir un nom d'utilisateur (BN) et un identifiant (KW).

5. Procédé selon la revendication 1, **caractérisé en ce que** les premières données d'interrogation (AD1) contiennent des informations de pays et les deuxièmes données d'interrogation (AD2) contiennent des informations de « fournisseur de service d'internet (ISP) ».

6. Procédé selon la revendication 1, **caractérisé en ce qu'**avec la première date de détermination (ED1) il est indiqué dans quel pays l'appareil de communication (KG) est relié avec internet.

7. Procédé selon la revendication 1, **caractérisé en ce qu'**avec la deuxième date de détermination (ED2), il est indiqué par le biais de quel « fournisseur de service d'internet » l'appareil de communication (KG) est relié à internet.

8. Procédé selon la revendication 1 ou la revendication 2, **caractérisé en ce que** les consignes de l'utilisateur, la première date de détermination (ED1) et la deuxième date de détermination (ED2) sont saisies au moyen de touches et/ou par la parole.

9. Procédé selon la revendication 1 ou la revendication 2, **caractérisé en ce que** les données d'interrogation (AD1, AD2) et les données d'information (HWD) sont émises par voie acoustique et/ou optique.

10. Procédé selon la revendication 1, **caractérisé en ce qu'**une partie mobile DECT (MT) de « voix sur protocole internet », de « protocole d'initiation de session », de « messagerie », de « courriels » et/ou de « notification de courriels » d'un téléphone DECT avec une station de base DECT (BS) connectée à internet et à un réseau (LNW) à commutation de circuits est employée en tant qu'appareil de communication (KG).

11. Procédé selon la revendication 1, **caractérisé en ce qu'**une partie mobile WLAN (MT) de « voix sur protocole internet », de « protocole d'initiation de session », de « messagerie », de « courriels » et/ou de « notification de courriel » d'un téléphone WLAN avec un « point d'accès WLAN » connecté à internet et à un réseau (LNW) à commutation de circuits est employée en tant qu'appareil de communication (KG).

12. Procédé selon la revendication 1, **caractérisé en ce qu'**un « boîtier décodeur » et/ou un routeur sont employés en tant qu'appareil de communication (KG).

13. Appareil de communication (KG) destiné à la transmission de données pour l'exécution de la mise à jour de la configuration / de logiciels dans l'appareil de communication (KG) relié à internet avec les caractéristiques suivantes :
a) une interface internet / appareil (IGS) par laquelle l'appareil de communication (KG) est relié physiquement (PVB) avec un serveur de mise à jour de configuration / de logiciels (KSS),
b) une interface d'utilisateur (BSS, DPL, HK, MIK, TAS), un dispositif de commande central (ZSE) avec une mémoire de données de configuration (KDS) associée et l'interface internet / appareil (IGS) sont conçus de telle manière, et le dispositif de commande central (ZSE) est relié de telle manière avec l'interface d'utilisateur (BSS, DPL, HK, MIK, TAS) et l'interface internet / appareil (IGS) que,
bl) pour la configuration de l'appareil de communication (KG) pour la communication basée sur internet, un état d'initialisation (INZ) de l'appareil de communication (KG) est créé par une saisie par le biais de l'interface d'utilisateur (BSS, DPL, HK, MIK, TAS),
b2) dans l'état d'initialisation (INZ), le démarrage de la configuration par la saisie d'une consigne (touche programmable « oui ») est initié par le biais de l'interface d'utilisateur (BSS, DPL, HK, MIK, TAS),
b3) avec le démarrage de la configuration, une connexion logique (LVB) vers le serveur de mise à jour de configuration / de logiciels (KSS) est établie par le biais de l'interface internet / appareil (IGS),
b4) au moins deux types de données d'interrogation envoyés à partir du serveur de mise à jour de configuration / de logiciels (KSS), des premières données d'interrogation (AD1) et des deuxièmes données d'interrogation (AD2) sont réceptionnées pour la détermination de données de configuration (KFD) à transmettre pour l'appareil de communication (KG) par l'interface internet / appareil (IGS) et sont transmises ultérieurement au dispositif de commande central (ZSE),
b5) les premières données d'interrogation (AD1) et les deuxièmes données d'interrogation (AD2) transmises sont délivrées par le dispositif de commande central (ZSE) par le biais de l'interface d'utilisateur (BSS, DPL, HK, MIK, TAS) et ce faisant, chaque fois, un état de saisie (EIZ) de l'appareil de communication (KG) est généré,
b6) dans l'état d'entrée (EIZ), une première date de détermination (ED1) est choisie à partir des premières données d'interrogation (AD1), et une deuxième date de détermination (ED2) est choisie à partir des deuxièmes données d'interrogation (AD2) par une saisie (touche programmable « OK ») par le biais de l'interface d'utilisateur (BSS, DPL, HK, MIK, TAS) pour la détermination des données de configuration (KFD), qui est respectivement transmise du dispositif de commande central (ZSE) au serveur de mise à jour de configuration / de logiciels (KSS) par le biais de l'interface internet / appareil (IGS),
b7) des données de configuration (KFD) pour l'appareil de communication (KG) envoyées du serveur de mise à jour de configuration / de logiciels (KSS), correspondant aux première et deuxième données de détermination (ED1, ED2) sont reçues par l'interface internet / appareil (IGS) et sont transmises ultérieurement au dispositif de commande central (ZSE), où elles sont stockées dans la mémoire de données de configuration (KDS).

14. Appareil de communication (KG) selon la revendication 13, **caractérisé en ce que** l'interface d'utilisateur (BSS, DPL, HK, MIK, TAS), le dispositif de commande central (ZSE) avec une mémoire de données de mise à jour de logiciels associée (SWDS), et l'interface internet / appareil (IGS) sont conçus de telle manière, et le dispositif de commande central (ZSE) avec l'interface d'utilisateur (BSS, DPL, HK, MIK, TAS) et l'interface internet / appareil (IGS) sont reliés de telle manière, que
a) des données d'information (HWD) correspondant aux données de configurations (KFD) transmises à partir du serveur de mise à jour de configuration / de logiciels (KSS) sont reçues pour l'exécution d'une mise à jour de logiciels pour l'appareil de communication (KG) par l'interface internet / appareil (IGS) et sont transmises ultérieurement au dispositif de commande central (ZSE),
b) les données d'informations (HWD) transmises sont délivrées à partir du dispositif de commande central (ZSE) par le biais de l'interface d'utilisateur (BSS, DPL, HK, MIK, TAS) et ce faisant, un état de saisie (EIZ) de l'appareil de communication (KG) est généré,
c) la mise à jour de logiciels est initiée au niveau de l'état de saisie (EIZ) par la saisie d'une nouvelle consigne (touche programmable « oui ») par le biais de l'interface d'utilisateur (BSS, DPL, HK, MIK, TAS),
d) des données de mise à jour de logiciels (SWAD) pour l'appareil de communication (KG) correspondant aux données d'information (HWD), envoyées par le serveur de mise à jour de configuration / de logiciels (KSS) sont reçues par l'interface internet / appareil (IGS) et sont transmises ultérieurement au dispositif de commande central (ZSE), où elles sont stockées dans la mémoire de données de mise à jour de logiciels (SWDS).

15. Appareil de communication (KG) selon la revendication 13 ou la revendication 14, **caractérisé en ce que** les données d'interrogation (AD1, AD2) er les données d'information (HWD) présentent des informations de consignes (STI).

16. Appareil de communication (KG) selon la revendication 15, **caractérisé en ce que** des systèmes d'exploitation (AMW) sont associés au dispositif de commande central (ZSE), qui exploitent les informations de consignes (STI) contenues dans les données d'interrogation (AD1, AD2) et dans les données d'information (HWD), où le dispositif de commande central (ZSE) génère l'état de saisie suite à cette exploitation par le biais de l'interface d'utilisateur (BSS, DPL, HK, MIK, TAS) .

17. Appareil de communication (KG) selon la revendication 16, **caractérisé en ce que** les informations de consignes (STI) sont obtenues de telle manière que, dans l'état de saisie (EIZ) généré par le dispositif de commande central (ZSE) et l'interface d'utilisateur (BSS, DPL, HK, MIK, TAS), l'utilisateur de l'appareil de communication (KG) est exhorté à saisir un nom d'utilisateur (BN) et un identifiant (KW).

18. Appareil de communication (KG) selon la revendication 13, **caractérisé en ce que** des informations relatives au pays sont contenues dans les premières données d'interrogation (AD1) et des informations sur le « fournisseur de service internet » sont contenues dans les deuxièmes données d'interrogation (AD2) .

19. Appareil de communication (KG) selon la revendication 13, **caractérisé en ce que** la première date de détermination (ED1) indique dans quel pays l'appareil de communication (KG) est relié avec internet.

20. Appareil de communication (KG) selon la revendication 13, **caractérisé en ce que** la deuxième date de détermination (ED2) indique par quel « fournisseur de service internet » l'appareil de communication (KG) est relié avec internet.

21. Appareil de communication (KG) selon la revendication 13 ou la revendication 14, **caractérisé en ce que** l'interface d'utilisateur (BSS, DPL, HK, MIK, TAS) est conçue de telle manière que les consignes de l'utilisateur, la première date de détermination (ED1) et la deuxième date de détermination (ED2) peuvent être saisies au moyen de touches et/ou par la parole.

22. Appareil de communication (KG) selon la revendication 13 ou la revendication 14, **caractérisé en ce que** l'interface d'utilisateur (BSS, DPL, HK, MIK, TAS) est conçu de telle manière que les données d'interrogation (AD1) et les données d'informations (HWD) peuvent être délivrées de manière acoustique et/ou optique.

23. Appareil de communication (KG) selon la revendication 13, **caractérisé par** une partie mobile DECT (MT) de « voix sur protocole internet », de « protocole d'initiation de session », de « messagerie », de « courriels » et/ou de « notification de courriels » d'un téléphone DECT avec une station de base DECT (BS) connectée respectivement à internet et à un réseau (LNW) à commutation de circuits.

24. Appareil de communication (KG) selon la revendication 13, **caractérisé par** une partie mobile WLAN (MT) de « voix sur protocole internet », de « protocole d'initiation de session », de « messagerie », de « courriels » et/ou de « notification de courriels » d'un téléphone WLAN avec un « point d'accès WLAN » connecté respectivement à internet et à un réseau (LNW) à commutation de circuits.

25. Appareil de communication (KG) selon la revendication 13, **caractérisé par** un « boîtier décodeur » et/ou un routeur.
